# EUROPEAN PATENT APPLICATION

(11) **EP 2 941 062 A1**
(43) Date of publication of application: **04.11.2015**
(21) Application number: 12891156.7
(22) Date of filing: 27.12.2012
(51) Int. Cl.: H04W 52/02, H04W 76/04

(54) **TRANSMISSION CONTROL METHOD, AND TRANSMISSION METHOD AND DEVICE**

(71) Applicant: Huawei Technologies Co., Ltd., Longgang District Shenzhen, Guangdong 518129 (CN)
(72) Inventor: JI, Pengyu, Shenzhen Guangdong 518129 (CN); HU, Zhenxing, Shenzhen Guangdong 518129 (CN); QUAN, Wei, Shenzhen Guangdong 518129 (CN); ZHANG, Jian, Shenzhen Guangdong 518129 (CN)
(74) Representative: Isarpatent
(86) International application number: PCT/CN2012/087657
(87) International publication number: WO 2014/101043

(57) **Abstract**

Embodiments of the present invention provide a transmission control method, a transmission method, and a device. The transmission control method includes: generating, by a network-side device, DTX sleep indication information, where the DTX sleep indication information is used to indicate a start time at which the network-side device enters a sleep state each time during DTX execution, and a time length of the network-side device being in the sleep state each time during the DTX execution; and sending, by the network-side device, the DTX sleep indication information to a UE in a cell of the network-side device, so that the UE suspends, according to the DTX sleep indication information, data processing and/or data transmission of the UE during a period when the network-side device is in the sleep state. Technical solutions of the present invention can be adopted to reduce power waste of the UE.

## Description

### TECHNICAL FIELD

Embodiments of the present invention relate to communications technologies, and in particular, to a transmission control method, a transmission method, and a device.

### BACKGROUND

In a long term evolution (Long Time Evolution, LTE for short) system, a new carrier type (New Carrier Types, NCT for short) cell with a small coverage range may be configured within coverage of a macro cell, to improve a communications capacity in a hotspot area. An NCT cell is a cell that uses a new carrier configuration solution, and uses an enhanced physical downlink channel (enhance Physical Downlink Control Channel, ePDCCH for short), to reduce the number of pilots and save frequency domain resources.

In the NCT cell, discontinuous transmission (Discontinuous Transmission, DTX for short) may be configured for an eNB in the NCT cell according to a requirement of a user equipment (User Equipment, UE for short) in the cell for obtaining a service or according to a power saving requirement of a base station (eNB) in the NCT cell. In other words, the eNB may be alternately in an active state and a sleep state, to reduce power consumption of the eNB. Periodic DTX or aperiodic DTX may be configured for the eNB. Correspondingly, discontinuous reception (Discontinuous Reception, DRX for short) may be configured for the UE in the NCT cell, to adapt to the DTX of the eNB. In other words, when the eNB is in the sleep state and does not send data, the UE is not activated to receive data.

Although the DRX adapting to the DTX of the eNB may be configured for the UE in the NCT cell to save power, if the UE has an uplink transmission requirement during a period when the eNB is in the sleep state, the UE switches to an active state to perform uplink transmission, and monitors a corresponding downlink channel, in other words, a physical downlink control channel (Physical Downlink Control Channel, PDCCH for short), to expect to receive uplink resource grant information of the eNB. In addition, the UE may also monitor a paging channel during this period. However, during this process, because the eNB is in the sleep state, the UE will not receive the uplink resource grant information sent by the eNB, which

### SUMMARY

Embodiments of the present invention provide a transmission control method, a transmission method, and a device, to reduce power waste of a UE.

According to a first aspect, a transmission control method is provided and includes:
generating, by a network-side device, discontinuous transmission DTX sleep indication information, where the DTX sleep indication information is used to indicate a start time at which the network-side device enters a sleep state each time during DTX execution, and a time length of the network-side device being in the sleep state each time during the DTX execution; and
sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state.

With reference to the first aspect, in a first possible implementation manner of the first aspect, the generating, by a network-side device, discontinuous transmission DTX sleep indication information includes:
generating, by the network-side device according to configuration information of periodic DTX, the DTX sleep indication information before the DTX execution, where the DTX sleep indication information includes a period length of executing DTX, a start time for executing DTX, and a sleep length within each DTX period.

With reference to the first possible implementation manner of the first aspect, in a second possible implementation manner of the first aspect, the sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state includes:
periodically broadcasting, by the network-side device from a beginning of the DTX execution, the DTX sleep indication information to the UE in the cell of the network-side device, so that the UE suspends, according to the DTX sleep indication information, the data processing and/or the data transmission of the UE during the period when the network-side device is in the sleep state.

With reference to the first aspect, in a third possible implementation manner of the first aspect, the generating, by a network-side device, discontinuous transmission DTX sleep indication information includes:
generating, by the network-side device before entering the sleep state each time during the DTX execution, the DTX sleep indication information, where the DTX sleep indication information includes: a start time for entering the sleep state this time, and a time length of being in the sleep state this time.

With reference to the third possible implementation manner of the first aspect, in a fourth possible implementation manner of the first aspect, the sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state includes:
sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state.

With reference to the fourth possible implementation manner of the first aspect, in a fifth possible implementation manner of the first aspect, the sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state includes:
sending, by the network-side device before entering the sleep state each time during the DTX execution, the DTX sleep indication information to the UE in the cell of the network-side device by using a paging message, a media access control MAC control element (CE), or downlink control information, so that the UE suspends, according to the DTX sleep indication information, the data processing and/or the data transmission of the UE during the period when the network-side device is in the sleep state.

With reference to the fourth possible implementation manner of the first aspect or the fifth possible implementation manner of the first aspect, in a sixth possible implementation manner of the first aspect, the sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state includes:
sending, by the network-side device before entering the sleep state each time during the DTX execution, the DTX sleep indication information to the UE in the cell of the network-side device for multiple times, to ensure that the UE suspends, according to the DTX sleep indication information, the data processing and/or the data transmission of the UE during the period when the network-side device is in the sleep state.

According to a second aspect, a transmission method is provided and includes:
receiving, by a user equipment UE, discontinuous transmission DTX sleep indication information sent by a network-side device, where the DTX sleep indication information is used to indicate a start time at which the network-side device enters a sleep state each time during DTX execution, and a time length of the network-side device being in the sleep state each time during the DTX execution; and
suspending, by the UE according to the DTX sleep indication information, data processing and/or data transmission of the UE during a period when the network-side device is in the sleep state.

With reference to the second aspect, in a first possible implementation manner of the second aspect, the receiving, by a user equipment UE, discontinuous transmission DTX sleep indication information sent by a network-side device includes:
receiving, by the UE, the DTX sleep indication information that is periodically broadcast by the network-side device from a beginning of the DTX execution; or
receiving, by the UE, the DTX sleep indication information that is sent by the network-side device before the network-side device enters the sleep state each time during the DTX execution.

With reference to the first possible implementation manner of the second aspect, in a second possible implementation manner of the second aspect, the receiving, by the UE, the DTX sleep indication information that is sent by the network-side device before the network-side device enters the sleep state each time during the DTX execution includes:
receiving, by the UE, a paging message, a media access control MAC control element (CE), or downlink control information that is sent by the network-side device before the network-side device enters the sleep state each time during the DTX execution and carries the DTX sleep indication information.

With reference to the second aspect, the first possible implementation manner of the second aspect, or the second possible implementation manner of the second aspect, in a third possible implementation manner of the second aspect, the suspending, by the UE according to the DTX sleep indication information, data processing and/or data transmission of the UE during a period when the network-side device is in the sleep state includes any one or a combination of the following operations:
stopping, by the UE according to the DTX sleep indication information, encapsulation of a protocol data unit PDU at each layer during the period when the network-side device is in the sleep state;
prohibiting, by the UE according to the DTX sleep indication information, sending of a scheduling request during the period when the network-side device is in the sleep state;
configuring, by the UE according to the DTX sleep indication information, that to-be-sent uplink data does not belong to any logical channel during the period when the network-side device is in the sleep state; and
prohibiting, by the UE according to the DTX sleep indication information, sending of a sequence number during the period when the network-side device is in the sleep state, and skipping monitoring a paging channel.

According to a third aspect, a network-side device is provided and includes:
a generating module, configured to generate discontinuous transmission DTX sleep indication information, where the DTX sleep indication information is used to indicate a start time at which the network-side device enters a sleep state each time during DTX execution, and a time length of the network-side device being in the sleep state each time during the DTX execution; and
a sending module, configured to send the DTX sleep indication information to a user equipment UE in a cell of the network-side device, so that the UE suspends, according to the DTX sleep indication information, data processing and/or data transmission of the UE during a period when the network-side device is in the sleep state.

With reference to the third aspect, in a first possible implementation manner of the third aspect, the generating module is specifically configured to generate, according to configuration information of periodic DTX, the DTX sleep indication information before the DTX execution, where the DTX sleep indication information includes a period length of executing DTX, a start time for executing DTX, and a sleep length within each DTX period.

With reference to the first possible implementation manner of the third aspect, in a second possible implementation manner of the third aspect, the sending module is specifically configured to periodically broadcast, from a beginning of the DTX execution, the DTX sleep indication information to the UE in the cell of the network-side device, so that the UE suspends, according to the DTX sleep indication information, the data processing and/or the data transmission of the UE during the period when the network-side device is in the sleep state.

With reference to the third aspect, in a third possible implementation manner of the third aspect, the generating module is specifically configured to generate, before entering the sleep state each time during the DTX execution, the DTX sleep indication information, where the DTX sleep indication information includes: a start time for entering the sleep state this time, and a time length of being in the sleep state this time.

With reference to the third possible implementation manner of the third aspect, in a fourth possible implementation manner of the third aspect, the sending module is specifically configured to send, before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state.

With reference to the fourth possible implementation manner of the third aspect, in a fifth possible implementation manner of the third aspect, the sending module is further specifically configured to send, before entering the sleep state each time during the DTX execution, the DTX sleep indication information to the UE in the cell of the network-side device by using a paging message, a media access control MAC control element CE, or downlink control information, so that the UE suspends, according to the DTX sleep indication information, the data processing and/or the data transmission of the UE during the period when the network-side device is in the sleep state.

With reference to the fourth possible implementation manner of the third aspect or the fifth possible implementation manner of the third aspect, in a sixth possible implementation manner of the third aspect, the sending module is specifically configured to send, before entering the sleep state each time during the DTX execution, the DTX sleep indication information to the UE in the cell of the network-side device for multiple times, to ensure that the UE suspends, according to the DTX sleep indication information, the data processing and/or the data transmission of the UE during the period when the network-side device is in the sleep state.

According to a fourth aspect, a user equipment is provided and includes:
a receiving module, configured to receive discontinuous transmission DTX sleep indication information sent by a network-side device, where the DTX sleep indication information is used to indicate a start time at which the network-side device enters a sleep state each time during DTX execution, and a time length of the network-side device being in the sleep state each time during the DTX execution; and
a suspending module, configured to suspend, according to the DTX sleep indication information, data processing and/or data transmission of the user equipment during a period when the network-side device is in the sleep state.

With reference to the fourth aspect, in a first possible implementation manner of the fourth aspect, the receiving module is specifically configured to receive the DTX sleep indication information that is periodically broadcast by the network-side device from a beginning of the DTX execution; or
the receiving module is specifically configured to receive the DTX sleep indication information that is sent by the network-side device before the network-side device enters the sleep state each time during the DTX execution.

With reference to the first possible implementation manner of the fourth aspect, in a second possible implementation manner of the fourth aspect, the receiving module is further specifically configured to receive a paging message, a media access control MAC control element CE, or downlink control information that is sent by the network-side device before the network-side device enters the sleep state each time during the DTX execution and carries the DTX sleep indication information.

With reference to the fourth aspect or the first possible implementation manner of the fourth aspect or the second possible implementation manner of the fourth aspect, in a third possible implementation manner of the fourth aspect, the suspending module is specifically configured to execute any one or a combination of the following operations:
stopping, according to the DTX sleep indication information, encapsulation of a protocol data unit PDU at each layer during the period when the network-side device is in the sleep state;
prohibiting, according to the DTX sleep indication information, sending of a scheduling request during the period when the network-side device is in the sleep state;
configuring, according to the DTX sleep indication information, that to-be-sent uplink data does not belong to any logical channel during the period when the network-side device is in the sleep state; and
prohibiting, according to the DTX sleep indication information, sending of a sequence number during the period when the network-side device is in the sleep state, and skipping monitoring a paging channel.

According to a fifth aspect, a network-side device is provided and includes:
a memory, configured to store a program;
a processor, configured to execute the program to generate discontinuous transmission DTX sleep indication information, where the DTX sleep indication information is used to indicate a start time at which the network-side device enters a sleep state each time during DTX execution, and a time length of the network-side device being in the sleep state each time during the DTX execution; and
a communications interface, configured to send the DTX sleep indication information to a user equipment UE in a cell of the network-side device, so that the UE suspends, according to the DTX sleep indication information, data processing and/or data transmission of the UE during a period when the network-side device is in the sleep state.

According to a sixth aspect, a user equipment is provided and includes:
a communications interface, configured to receive discontinuous transmission DTX sleep indication information sent by a network-side device, where the DTX sleep indication information is used to indicate a start time at which the network-side device enters a sleep state each time during DTX execution, and a time length of the network-side device being in the sleep state each time during the DTX execution;
a memory, configured to store a program; and
a processor, configured to execute the program to suspend, according to the DTX sleep indication information, data processing and/or data transmission of the UE during a period when the network-side device is in the sleep state.

According to the transmission control method, the transmission method, and the device provided in the embodiments of the present invention, a network-side device sends, to a UE in a cell, a start time at which the network-side device enters a sleep state each time during DTX execution, and a time length of the network-side device being in the sleep state each time during the DTX execution, so that the UE can learn, according to the start time at which the network-side device enters the sleep state each time and the time length of the network-side device being in the sleep state each time, status of the network-side device entering the sleep state, and suspend data processing and/or data transmission of the UE during a period when the network-side device is in the sleep state each time, to save power that is consumed by the UE to perform the data processing and/or the data transmission during a period when the network-side device is in the sleep state, and reduce power waste of the UE.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a transmission control method according to an embodiment of the present invention;
FIG. 2 is a flowchart of a transmission method according to an embodiment of the present invention;
FIG. 3 is a schematic structural diagram of a network-side device according to an embodiment of the present invention;
FIG. 4 is a schematic structural diagram of another network-side device according to an embodiment of the present invention;
FIG. 5 is a schematic structural diagram of still another network-side device according to an embodiment of the present invention;
FIG. 6 is a schematic structural diagram of a UE according to an embodiment of the present invention;
FIG. 7 is a schematic structural diagram of another UE according to an embodiment of the present invention; and
FIG. 8 is a schematic structural diagram of still another UE according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

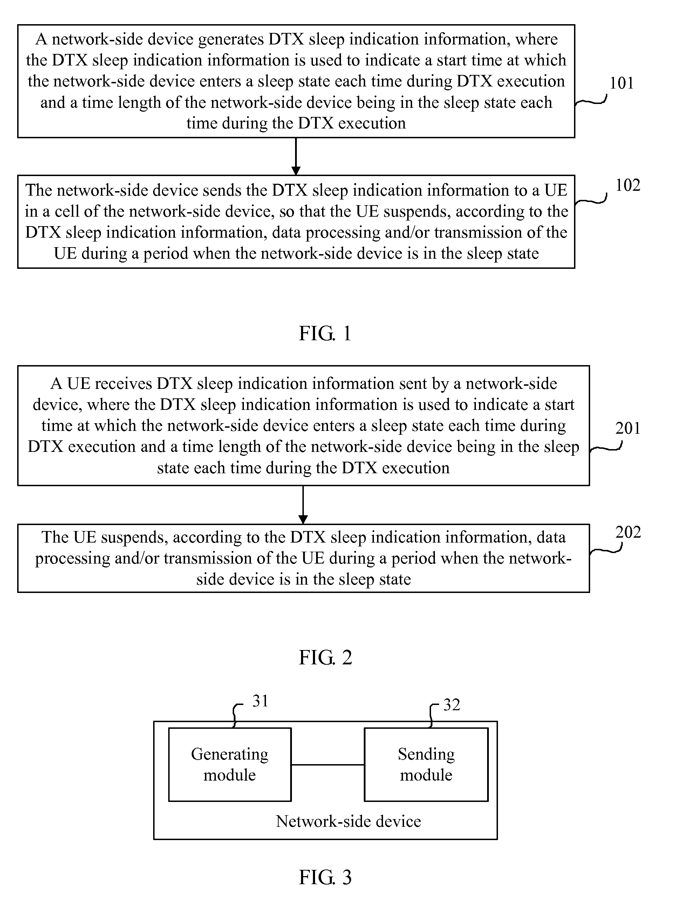

FIG. 1 is a flowchart of a transmission control method according to an embodiment of the present invention. As shown in FIG. 1, the method in this embodiment includes:
Step 101: A network-side device generates DTX sleep indication information, where the DTX sleep indication information is used to indicate a start time at which the network-side device enters a sleep state each time during DTX execution, and a time length of the network-side device being in the sleep state each time during the DTX execution.
Step 102: The network-side device sends the DTX sleep indication information to a UE in a cell of the network-side device, so that the UE suspends, according to the DTX sleep indication information, data processing and/or data transmission of the UE during a period when the network-side device is in the sleep state.

In this embodiment, the network-side device may be an eNB, but is not limited thereto.

A transmission mode of the network-side device is set to a DTX mode, which may be periodic DTX or aperiodic DTX. In the DTX mode, the network-side device is alternately in an active state and the sleep state, thereby reducing power consumption of the network-side device.

A network-side device generates DTX sleep indication information, which is used to indicate a start time at which the network-side device enters a sleep state each time during DTX execution, and a time length of the network-side device being in the sleep state each time during the DTX execution, and sends the generated DTX sleep indication information to a UE, so that the UE can learn, according to the DTX sleep indication information sent by the network-side device, when the network-side device enters the sleep state, and a time length of the network-side device being in the sleep state. Then, the UE may suspend data processing and/or data transmission of the UE during a period when the network-side device is in the sleep state each time. The UE does not restore the data processing and/or the data transmission until the network-side device switches to an active state again, to save power that is consumed for performing the data processing and/or the data transmission during a period when the network-side device is in the sleep state, and help further save power of the UE.

"Suspending data processing and/or data transmission" described in this embodiment of the present invention mainly refers to halting the data processing and/or the data transmission.

In this embodiment, the data processing and/or the data transmission suspended by the UE during the period when the network-side device is in the sleep state may include data processing and/or data transmission at each layer such as a packet data convergence protocol (Packet Data Convergence Protocol, PDCP for short) layer, a radio link control (Radio Link Control, RLC for short) layer, and a media access control (Media Access Control, MAC for short) layer. The following uses examples for description.

The suspending, by the UE according to the DTX sleep indication information sent by the network-side device, data processing and/or data transmission of the UE during a period when the network-side device is in the sleep state includes any one or a combination of the following operations:
stopping, by the UE according to the DTX sleep indication information, encapsulation of a protocol data unit (Protocol Data Unit, PDU for short) at each layer during the period when the network-side device is in the sleep state;
prohibiting, by the UE according to the DTX sleep indication information, sending of a scheduling request (Scheduling Request, SR for short) during the period when the network-side device is in the sleep state;
configuring, by the UE according to the DTX sleep indication information, that to-be-sent uplink data does not belong to any logical channel during the period when the network-side device is in the sleep state; which means, the UE is not triggered to send a buffer status report (Buffer State Report, BSR for short) to a network-side, so as not to send the uplink data; and
prohibiting, by the UE according to the DTX sleep indication information, sending of a random access sequence number (preamble) during the period when the network-side device is in the sleep state, and not monitoring a paging channel.

For a UE that is in a radio resource control (Radio Resource Control, RRC for short) connection state and a UE that is in an idle state, data processing and/or data transmission that is suspended may be different. For this, refer to descriptions of the following examples.

In an optional implementation manner, the DTX configured for the network-side device is periodic DTX, and the network-side device stores configuration information of the periodic DTX, where the configuration information includes a period length of DTX, a start time for executing DTX, and a sleep length within each DTX period. A period length of DTX consists of a time length of an active state, and a time length of a sleep state. The time length of the active state within each DTX period may be determined according to the period length of DTX and the sleep length within each DTX period. Then, with reference to the start time for executing DTX, a time at which the network-side device enters the sleep state within each DTX period may be determined, and the sleep length within each DTX period is a time length of the network-side device being in the sleep state each time. In this case, the network-side device may generate, according to the configuration information of the periodic DTX, the DTX sleep indication information before the DTX execution. In this implementation manner, the DTX sleep indication information includes but is not limited to: the period length of executing DTX, the start time for executing DTX, and the sleep length within each DTX period.

Based on the foregoing, the process during which the network-side device sends the DTX sleep indication information to a UE in a cell of the network-side device, so that the UE suspends, according to the DTX sleep indication information, data processing and/or data transmission of the UE during a period when the network-side device is in the sleep state includes that: the network-side device may periodically broadcast, from a beginning of the DTX execution, the DTX sleep indication information to the UE in the cell of the network-side device, so that the UE suspends, according to the DTX sleep indication information, the data processing and/or the data transmission of the UE during the period when the network-side device is in the sleep state. The network-side device may send the DTX sleep indication information to the UE in a manner of broadcast, unicast, or the like.

The network-side device periodically broadcasts, from the beginning of the DTX execution, the DTX sleep indication information, which helps a UE that accesses a network at any time obtain in time the start time at which the network-side device enters the sleep state each time and the time length of the network-side device being in the sleep state each time. Therefore, this is a preferred implementation manner.

In an optional implementation manner, the DTX configured for the network-side device is aperiodic DTX. In this case, the network-side device irregularly enters the sleep state according to an actual application situation during the DTX execution, and the time length of the network-side device being in the sleep state each time does not have a fixed rule either. Based on this, this embodiment provides an implementation manner in which a network-side device generates discontinuous transmission DTX sleep indication information, and the implementation manner includes that: the network-side device generates, before entering the sleep state each time during the DTX execution, the DTX sleep indication information, where the DTX sleep indication information includes: a start time for entering the sleep state this time, and a time length of being in the sleep state this time. The network-side device determines, according to an actual application situation and before entering the sleep state, the time for entering the sleep state this time and the time length of being in the sleep state this time. Therefore, the network-side device generates, before entering the sleep state each time, the DTX sleep indication information that includes the start time for entering the sleep state this time and the time length of being in the sleep state this time.

Based on the foregoing, another implementation manner in which the network-side device sends the DTX sleep indication information to a UE in a cell of the network-side device, so that the UE suspends, according to the DTX sleep indication information, data processing and/or data transmission of the UE during a period when the network-side device is in the sleep state includes that: the network-side device sends, before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state.

For example, the network device may send, before entering the sleep state each time during the DTX execution, the DTX sleep indication information to the UE in the cell of the network-side device by using a paging message, a MAC control element (Control Element, CE for short), or downlink control information (Downlink Control Information, DCI for short), so that the UE suspends, according to the DTX sleep indication information, the data processing and/or the data transmission of the UE during the period when the network-side device is in the sleep state.

Optionally, to increase reliability and ensure correct receiving by the UE, the network-side device may send, before entering the sleep state each time during the DTX execution, the DTX sleep indication information to the UE in the cell of the network-side device for multiple times, to ensure that the UE correctly receives and decodes the DTX sleep indication information, so that the UE suspends, according to the DTX sleep indication information, the data processing and/or the data transmission of the UE during the period when the network-side device is in the sleep state.

With reference to whether the periodic DTX or the aperiodic DTX is configured for the network-side device, and whether the UE is in the RRC connection state or the RRC idle state, the following uses examples to describe specific implementation manners and effects of the technical solutions of the present invention.

In the prior art, the DRX adapting to the DTX of the network-side device may be configured for a UE that is in an NCT cell and in the RRC connection state to save power. However, if the UE needs to send uplink data during the period when the network-side device is in the sleep state, the UE sends an SR to the network-side device to request an uplink resource, and switches to an active state to monitor a physical downlink control channel (Physical Downlink Control Channel, PDCCH for short), to expect to receive an uplink resource grant message. However, during this process, because the network-side device is in the sleep state, the UE does not receive the uplink resource grant message, and the UE resends the SR for multiple times, resulting in power waste.

In addition, in the prior art, if a UE that is in the NCT cell and in the RRC idle state needs to establish an RRC connection to the network-side device during the period when the network-side device is in the sleep state, to perform data transmission, a random access process is triggered. However, the UE cannot receive a random access response (Random Access Response, RAR for short) during the period, which causes the UE to retransmit the random access sequence number (preamble), resulting in power waste of the UE and an extra signaling overhead.

In a scenario in which periodic DTX is configured for the network-side device of the NCT cell, to resolve problems such as power waste that is caused by repeated sending of the SR for multiple times by the UE in the RRC connection state, and power waste and an increase of an extra signaling overhead that are caused by retransmission of the sequence number by the UE in the RRC idle state, the method in this embodiment includes that: the network-side device generates the DTX sleep indication information according to configuration information of the DTX execution, and broadcasts the DTX sleep indication information in the cell, where the DTX sleep indication information includes but is not limited to: a period length of executing DTX, a start time for executing DTX, and a sleep length within each DTX period. In this scenario, the time length of the network-side device being in the sleep state each time is the same.

The UE that is in the NCT cell and in the RRC connection state may receive and decode the DTX sleep indication information broadcast by the network-side device, and may obtain, after successfully decoding the DTX sleep indication information, detailed information such as the start time at which the network-side device enters the sleep state each time during the entire DTX process and the time length of the network-side device being in the sleep state each time during the entire DTX process. In this case, whenever the network-side device switches from the active state to the sleep state, the UE suspends data processing and/or data transmission of the UE at such layers as PDCP/RLC/MAC during this period until the network-side device switches to the active state again. When the UE switches to the active state again, the UE continues to perform corresponding data processing and/or data transmission from a state when "suspending" was executed. "Suspending" here includes but is not limited to: stopping the encapsulation of the PDU at each layer, prohibiting the sending of the SR, and configuring that the to-be-sent data does not belong to any logical channel. The UE that is in the RRC connection state may save, by suspending data processing and/or data transmission of the UE at each layer, power that is consumed for performing the data processing and/or the data transmission during the period when the network-side device is in the sleep state.

The UE that is in the NCT cell and in the RRC idle state may receive and decode the DTX sleep indication information broadcast by the network-side device, and may obtain, after successfully decoding the DTX sleep indication information, detailed information such as the start time at which the network-side device enters the sleep state each time during the entire DTX process and the time length of the network-side device being in the sleep state each time during the entire DTX process. In this case, whenever the network-side device switches from the active state to the sleep state, that the UE suspends data processing and/or data transmission of the UE mainly means that the UE prohibits the sending of the random access sequence number. In other words, the UE prohibits execution of a random access process. Optionally, after receiving related information of executing the DTX process by the network-side device, the UE may perform determining. If the time length of the network-side device being in the sleep state each time can be accepted, the UE continues to camp on the cell; if the time length of the network-side device being in the sleep state each time cannot be accepted, the UE camps on another cell by executing cell reselection. The UE that is in the RRC idle state may save, by prohibiting the sending of the sequence number, power that is consumed for initiating the random access process during the period when the network-side device is in the sleep state and a signaling overhead consumed for initiating the random access process during this period.

In a scenario in which aperiodic DTX is configured for the network-side device of the NCT cell, to resolve problems such as power waste that is caused by repeated sending of the SR for multiple times by the UE in the RRC connection state, and power waste and an increase of an extra signaling overhead that are caused by retransmission of the sequence number by the UE in the RRC idle state, the method in this embodiment includes that: the network-side device generates the DTX sleep indication information before entering the sleep state each time during the DTX execution, where the DTX sleep indication information carries the start time at which the network-side device enters the sleep state this time and the time length of the network-side device being in the sleep state this time; and then sends the DTX sleep indication information to the UE. For example, the network-side device may use a paging message, a MAC CE, or DCI to carry the DTX sleep indication information, and send the DTX sleep indication information to the UE. In this scenario, the time length of the network-side device being in the sleep state each time may be different. Optionally, to increase reliability and ensure correct receiving by the UE, the network-side device may send the DTX sleep indication information to the UE for multiple times.

The UE that is in the NCT cell and in the RRC connection state may receive and decode the DTX sleep indication information sent by the network-side device, and may obtain, after successfully decoding the DTX sleep indication information, detailed information such as the start time at which the network-side device enters the sleep state each time during the entire DTX process and the time length of the network-side device being in the sleep state each time during the entire DTX process. In this case, whenever the network-side device switches from the active state to the sleep state, the UE suspends data processing and/or data transmission of the UE at such layers as PDCP/RLC/MAC during this period until the network-side device switches to the active state again. When the UE switches to the active state again, the UE continues to perform corresponding data processing and/or data transmission from a state when "suspending" was executed. "Suspending" here includes but is not limited to: stopping the encapsulation of the PDU at each layer, prohibiting the sending of the SR, and configuring that the to-be-sent data does not belong to any logical channel. The UE that is in the RRC connection state may save, by suspending data processing and/or data transmission of the UE at each layer, power that is consumed for performing the data processing and/or the data transmission during the period when the network-side device is in the sleep state.

The UE that is in the NCT cell and in the RRC idle state may receive and decode the DTX sleep indication information sent by the network-side device, and may obtain, after successfully decoding the DTX sleep indication information, detailed information such as the start time at which the network-side device enters the sleep state each time during the entire DTX process and the time length of the network-side device being in the sleep state each time during the entire DTX process. In this case, whenever the network-side device switches from the active state to the sleep state, that the UE suspends data processing and/or data transmission of the UE mainly means that the UE prohibits the sending of the sequence number, which means, the UE prohibits execution of a random access process. Optionally, after receiving related information of executing the DTX process by the network-side device, the UE may perform determining. If the time length of the network-side device being in the sleep state each time can be accepted, the UE continues to camp on the cell; if the time length of the network-side device being in the sleep state each time cannot be accepted, the UE camps on another cell by executing cell reselection. The UE that is in the RRC idle state may save, by prohibiting the sending of the sequence number, power that is consumed for initiating the random access process during the period when the network-side device is in the sleep state and a signaling overhead consumed for initiating the random access process during this period.

It is noted herein that, the UE that is in the RRC connection state can receive the DTX sleep indication information that is carried by using a paging message, a MAC CE, or DCI; while the UE that is in the RRC idle state can only receive the DTX sleep indication information that is carried by using a paging message.

Based on the foregoing implementation manners, in an optional implementation manner, if a time length of the network-side device being in the sleep state this time is greater than a preset sleep length threshold, the network-side device receives, during the period when the network-side device is in the sleep state, indication information sent by the UE, where the indication information is sent by the UE at a preset time point or periodically during a period when the network-side device is in the sleep state this time, and the UE sends the indication information after determining, according to the DTX sleep indication information, that the time length of the network-side device being in the sleep state this time is greater than the sleep length threshold. The network-side device then determines, according to average signal strength of the indication information and/or occurrence density of the indication information, whether to enter an active state in a DTX process in advance.

In this implementation manner, a sleep length threshold is preset, and is used to determine whether the time length of the network-side device being in the sleep state each time is excessively long. If a time length of the network-side device being in the sleep state in a time is greater than the preset sleep length threshold, it indicates that the time length of the network-side device being in the sleep state is excessively long. Therefore, the network-side may consider whether to enter the active state in the DTX process in advance, to provide a service to the UE in time. In this implementation manner, the preset sleep length threshold is configured for both the network-side device and the UE. After receiving the DTX sleep indication information sent by the network-side device, the UE may determine, according to the preset sleep length threshold, whether the time length of the network-side device being in the sleep state each time is excessively long. If the time length of the network-side device being in the sleep state each time is excessively long, the UE sends the indication information to the network-side device although the network-side device is in the sleep state. Specifically, the indication information may be sent at the preset time point or periodically during the period when the network-side device is in the sleep state this time. In addition, after determining that the time length of the network-side device being in the sleep state this time is excessively long, all UEs in the cell may send the indication information to the network-side device. Based on this, the network-side device may receive multiple pieces of indication information during the period when the network-side device is in the sleep state this time. Therefore, the network-side device averages signal strength of the multiple pieces of indication information to obtain average signal strength of the indication information, or collects statistics on occurrence time points of the multiple pieces of indication information to obtain occurrence density of the indication information (this occurrence density is considered from the perspective of occurrence frequency of the indication information), or collects statistics on UEs that send the indication information to obtain occurrence density of the indication information (this occurrence density is considered from the perspective of the number of UEs that send the indication information), and then determines, according to the average signal strength of the indication information and/or the occurrence density of the indication information, whether to enter the active state in the DTX process in advance, in other words, determines whether to exit the sleep state in advance.

For example, the network-side device may pre-store a signal strength threshold and/or an occurrence density threshold, and compare the obtained signal strength of the indication information and/or the obtained occurrence density of the indication information with the pre-stored signal strength threshold and/or the pre-stored occurrence density threshold respectively. If the obtained signal strength of the indication information and/or the obtained occurrence density of the indication information is greater than the pre-stored signal strength threshold and/or the pre-stored occurrence density threshold, the network-side device may enter the active state in the DTX process in advance; if the obtained signal strength of the indication information and/or the obtained occurrence density of the indication information is not greater than the pre-stored signal strength threshold and/or the pre-stored occurrence density threshold, the current sleep state of the network-side device is retained.

The indication information sent by the UE may include but is not limited to: a downlink pilot, an SR, and a sounding reference signal (Sounding Reference Signal, SRS for short).

Further optionally, before that the network-side device receives, during the period when the network-side device is in the sleep state, indication information sent by the UE, the method includes: if the time length of the network-side device being in the sleep state this time is greater than the sleep length threshold, the network-side device enters a short active state for at least one time during the period when the network-side device is in the sleep state, and sends, in the short active state, a downlink pilot signal to the UE, so that the UE sends the indication information according to strength of the downlink pilot signal. The short active state refers to an active state that the network-side device enters for a short period of time during the period when the network-side device is in the sleep state, where a time length of the short active state is far less than that of a normal active state in the DTX process, and the network-side device can only send the downlink pilot signal during a period when the network-side device is in the short active state. The downlink pilot signal includes but is not limited to: a cell-specific reference signal (Cell-specific Reference Signal, CRS for short), a primary synchronization signal (Primary Synchronization Signal, PSS for short), and a secondary synchronization signal (Secondary Synchronization Signal, SSS for short). The network-side device may enter the short active state at a specified time point or periodically during the period when the network-side device is in the sleep state this time. The network-side device does not consume too much power to send the downlink plot signal. In this implementation manner, by entering the short active state during the period when the network-side device is in the sleep state and sending, in the short active state, the downlink plot signal to the UE, the network-side device guides the UE to determine, according to the detected strength of the pilot signal, whether to send the indication information during the period when the network-side device is in the short active state, to instruct the network-side device to provide a service to the UE, and the network-side device determines, according to the received indication information, whether to enter the active state in the DTX process in advance.

Based on the foregoing implementation manner in which the UE sends the indication information to the network-side device during the period when network-side device is in the sleep state, the transmission control method provided in this embodiment further includes:
determining, by the network-side device before entering the sleep state each time during the DTX execution, whether a forthcoming time length of the network-side device being in the sleep state is greater than the sleep length threshold; if a result of the determining is yes, sending, by the network-side device before entering the sleep state in which the time length is greater than the sleep length threshold, clock information of the network-side device to the UE, so that the UE periodically monitors, according to the clock information, the network-side device during a period when the network-side device is in the sleep state in which the time length is greater than the sleep length threshold, to determine whether the network-side device enters the active state in the DTX process in advance.

The network-side device may enter the active state in the DTX process in advance, and the UE does not know a specific time at which the network-side device enters the active state in the DTX process. Therefore, the UE needs to monitor the network-side device to determine whether the network-side device enters the active state in the DTX process in advance. Further, if the UE monitors the network-side device all the time, power of the UE is wasted. Therefore, a preferred implementation manner is that: the UE periodically monitors the network-side device when the time length of the network-side device being in the sleep state is greater than the preset sleep length threshold, to determine whether the network-side device enters the active state in the DTX process in advance. However, during the period when the network-side device is in the sleep state, the data processing and/or the data transmission of the UE has been suspended, so that local clock information of the UE may be lost. Therefore, the network-side device needs to provide the clock information, so that the UE implements periodic monitoring of the network-side device. Based on this, the network-side device first determines, before entering the sleep state, whether the time length of the network-side device being in the sleep state this time is excessively long. If the time length of the network-side device being in the sleep state this time is excessively long, the network-side device sends the clock information of the network-side device to the UE in the cell, so that the UE periodically monitors the network-side device according to the clock information, to determine whether the network-side device enters the active state in the DTX process in advance. In this case, the UE may send, when determining that the network-side device enters the active state in the DTX process in advance, data to the network-side device in time.

It is noted herein that, in the foregoing implementation manners, the UE reports, when the time length of the network-side device being in the sleep state is greater than the preset sleep length threshold, the indication information to the network-side device during the period when the network-side device is in the sleep state; the foregoing implementation manners especially apply to a scenario in which aperiodic DTX is configured for the network-side device. In this scenario, the time length of the network-side device being in the sleep state each time is different. However, it is not limited to this scenario.

FIG. 2 is a flowchart of a transmission method according to an embodiment of the present invention. As shown in FIG. 2, the method in this embodiment includes:
Step 201: A UE receives DTX sleep indication information sent by a network-side device, where the DTX sleep indication information is used to indicate a start time at which the network-side device enters a sleep state each time during DTX execution, and a time length of the network-side device being in the sleep state each time during the DTX execution.
Step 202: The UE suspends, according to the DTX sleep indication information, data processing and/or data transmission of the UE during a period when the network-side device is in the sleep state.

In an optional implementation manner, an implementation manner of step 201 includes that: the UE receives the DTX sleep indication information that is periodically broadcast by the network-side device from a beginning of the DTX execution. This implementation manner applies to a scenario in which periodic DTX is configured for the network-side device.

In an optional implementation manner, another implementation manner of step 201 includes that: the UE receives the DTX sleep indication information that is sent by the network-side device before the network-side device enters the sleep state each time during the DTX execution. This implementation manner particularly applies to a scenario in which aperiodic DTX is configured for the network-side device, which, however, is not limited thereto. Further optionally, the UE may receive a paging message, a MAC CE, or DCI that is sent by the network-side device before the network-side device enters the sleep state each time during the DTX execution and carries the DTX sleep indication information. It is noted herein that, if the UE is in an RRC connection state, the UE can receive the DTX sleep indication that is carried by using a paging message, a MAC CE, or DCI; and if the UE is in an RRC idle state, the UE can only receive the DTX sleep indication information that is carried by using a paging message.

In this embodiment, the data processing and/or the data transmission suspended by the UE according to the DTX sleep indication information during the period when the network-side device is in the sleep state includes data processing and/or data transmission at each layer such as a PDCP layer, an RLC layer, and a MAC layer. For example, the suspending, by the UE according to the DTX sleep indication information, data processing and/or data transmission of the UE during a period when the network-side device is in the sleep state includes any one or a combination of the following operations:
stopping, by the UE according to the DTX sleep indication information, encapsulation of a protocol data unit (Protocol Data Unit, PDU for short) at each layer during the period when the network-side device is in the sleep state;
prohibiting, by the UE according to the DTX sleep indication information, sending of an SR during the period when the network-side device is in the sleep state;
configuring, by the UE according to the DTX sleep indication information, that to-be-sent uplink data does not belong to any logical channel during the period when the network-side device is in the sleep state; which means, the UE is not triggered to send a BSR to the network-side device, so as not to send the uplink data; and
prohibiting, by the UE according to the DTX sleep indication information, sending of a random access sequence number (preamble) during the period when the network-side device is in the sleep state, and skips monitoring a paging channel.

In an optional implementation manner, after receiving the DTX sleep indication information sent by the network-side device, the UE may determine, according to the DTX sleep indication information, whether a time length of the network-side device being in the sleep state this time is greater than a preset sleep length threshold. If a result of the determining is yes, the UE sends indication information to the network-side device at a preset time point or periodically during the period when the network-side device is in the sleep state, so that the network-side device determines, according to average signal strength of the indication information and/or occurrence density of the indication information, whether to enter an active state in a DTX process in advance.

Further optionally, before that the UE sends indication information to the network-side device at a preset time point or periodically during the period when the network-side device is in the sleep state, the method includes that: the UE receives a downlink pilot signal sent by the network-side device during the period when the network-side device is in the sleep state, where the downlink pilot signal is sent to the UE by the network-side device in a short active state, and the network-side device enters, when the time length of the network-side device being in the sleep state this time is greater than the sleep length threshold, the short active state for at least one time during a period when the network-side device is in the sleep state this time. Based on this, that the UE sends indication information to the network-side device at a preset time point or periodically during the period when the network-side device is in the sleep state includes that: the UE sends, according to strength of the downlink pilot signal, the indication information to the network-side device at the preset time point or periodically. For example, if the strength of the downlink pilot signal is greater than a preset strength threshold, the UE may send the indication information to the network-side device at the preset time point or periodically.

Based on the foregoing implementation manner in which the UE sends the indication information to the network-side device during the period when the network-side device is in the sleep state, considering that the network-side device may enter the active state in the DTX process in advance, the UE periodically monitors the network-side device preferably, to learn in time whether the network-side device enters the active state in the DTX process in advance. However, during the period when the network-side device is in the sleep state, the UE has suspended the data processing and/or the data transmission; so clock information of the UE may be lost. Therefore, the network-side device needs to provide the clock information to the UE to enable the UE to monitor the network-side device periodically. Based on this, the network-side device may send the clock information of the network-side device to the UE when a forthcoming time length of the network-side device being in the sleep state is greater than the sleep length threshold. In a case that the time length of the network-side device being in the sleep state this time is greater than the sleep length threshold, the UE receives, before the network-side device enters the sleep state this time, the clock information of the network-side device that is sent by the network-side device, and periodically monitors, according to the clock information, the network-side device during the period when the network-side device is in the sleep state this time, to determine whether the network-side device enters the active state in the DTX process in advance.

The transmission method provided in this embodiment is described from the perspective of the UE. For a detailed operation process of the method, refer to descriptions in the transmission control method embodiment shown in FIG. 1, and details are not described herein again.

According to the transmission method provided in this embodiment, a UE determines, according to a start time at which a network-side device enters a sleep state each time during DTX execution, and a time length of the network-side device being in the sleep state each time during the DTX execution, when the network-side device enters the sleep state, and a time length of the network-side device being in the sleep state, where the start time and the time length are provided by the network-side device, so that the UE suspends data processing and/or data transmission of the UE during a period when the network-side device is in the sleep state, to save power that is consumed for performing the data processing and/or the data transmission during the period when the network-side device is in the sleep state, a signaling overhead, and the like.

FIG. 3 is a schematic structural diagram of a network-side device according to an embodiment of the present invention. As shown in FIG. 3, the network-side device in this embodiment includes: a generating module 31 and a sending module 32.

The generating module 31 is configured to generate DTX sleep indication information, where the DTX sleep indication information is used to indicate a start time at which the network-side device in this embodiment enters a sleep state each time during DTX execution, and a time length of the network-side device being in the sleep state each time during the DTX execution.

The sending module 32 is connected to the generating module 31 and is configured to send, to a UE in a cell of the network-side device in this embodiment, the DTX sleep indication information generated by the generating module 31, so that the UE suspends, according to the DTX sleep indication information, data processing and/or data transmission of the UE during a period when the network-side device in this embodiment is in the sleep state.

In an optional implementation manner, the generating module 31 is specifically configured to generate, according to configuration information of periodic DTX, the DTX sleep indication information before the DTX execution, where the DTX sleep indication information includes a period length of executing DTX, a start time for executing DTX, and a sleep length within each DTX period.

Correspondingly, the sending module 32 is specifically configured to periodically broadcast, from a beginning of the DTX execution, the DTX sleep indication information to the UE in the cell of the network-side device in this embodiment, so that the UE suspends, according to the DTX sleep indication information, the data processing and/or the data transmission of the UE during the period when the network-side device in this embodiment is in the sleep state.

In an optional implementation manner, the generating module 31 may be specifically configured to generate, before the network-side device enters the sleep state each time during the DTX execution, the DTX sleep indication information, where the DTX sleep indication information includes: a start time for entering the sleep state this time, and a time length of being in the sleep state this time.

Correspondingly, the sending module 32 may be specifically configured to send, before the network-side device enters the sleep state each time during the DTX execution, the DTX sleep indication information to the UE in the cell of the network-side device in this embodiment, so that the UE suspends, according to the DTX sleep indication information, the data processing and/or the data transmission of the UE during the period when the network-side device in this embodiment is in the sleep state.

The sending module 32 is further specifically configured to send, before the network-side device enters the sleep state each time during the DTX execution, the DTX sleep indication information to the UE in the cell of the network-side device in this embodiment by using a paging message, a MAC CE, or downlink control information, so that the UE suspends, according to the DTX sleep indication information, the data processing and/or the data transmission of the UE during the period when the network-side device in this embodiment is in the sleep state.

In an optional implementation manner, the sending module 32 may be specifically configured to send, before the network-side device enters the sleep state each time during the DTX execution, the DTX sleep indication information to the UE in the cell of the network-side device in this embodiment for multiple times, to ensure that the UE suspends, according to the DTX sleep indication information, the data processing and/or the data transmission of the UE during the period when the network-side device in this embodiment is in the sleep state.

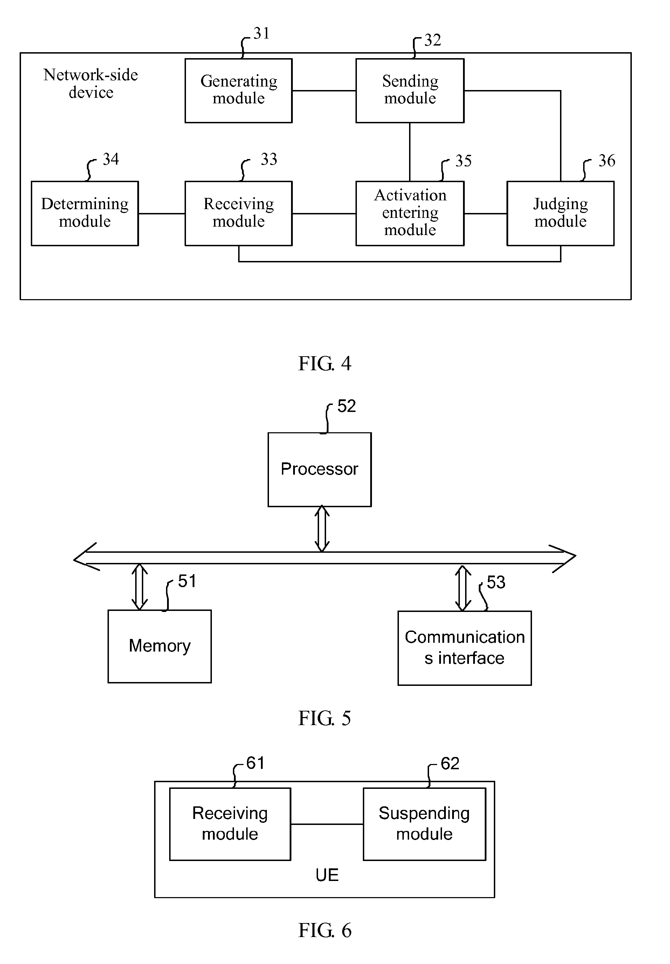

As shown in FIG. 4, the network-side device in this embodiment further includes: a receiving module 33 and a determining module 34.

The receiving module 33 is configured to: if a time length of the network-side device in this embodiment being in the sleep state this time is greater than a preset sleep length threshold, receive, during the period when the network-side device in this embodiment is in the sleep state, indication information sent by the UE, where the indication information is sent by the UE at a preset time point or periodically during a period when the network-side device in this embodiment is in the sleep state this time, and the UE sends the indication information after determining, according to the DTX sleep indication information, that the time length of the network-side device in this embodiment being in the sleep state this time is greater than the sleep length threshold.

The determining module 34 is connected to the receiving module 33 and is configured to determine, according to average signal strength of the indication information and/or occurrence density of the indication information, whether to enter an active state in a DTX process in advance, where the indication information is received by the receiving module 33.

As shown in FIG. 4, the network-side device in this embodiment further includes: an activation entering module 35.

The activation entering module 35 is connected to the receiving module 33 and is configured to: before the receiving module 33 receives the indication information, and when the time length of the network-side device in this embodiment being in the sleep state this time is greater than the sleep length threshold, enter a short active state for at least one time during the period when the network-side device in this embodiment is in the sleep state.

Based on this, the sending module 32 is further connected to the activation entering module 35 and is configured to send, in the short active state, a downlink pilot signal to the UE, so that the UE sends the indication information according to strength of the downlink pilot signal.

As shown in FIG. 4, the network-side device in this embodiment further includes: a judging module 36.

The judging module 36 is configured to determine, before the network-side device enters the sleep state each time during the DTX execution, whether a forthcoming time length of the network-side device being in the sleep state is greater than the sleep length threshold.

The sending module 32 is further connected to the judging module 36 and is configured to: if a result of the determining of the judging module 36 is yes, send, before the network-side device enters the sleep state in which the time length is greater than the sleep length threshold, clock information of the network-side device in this embodiment to the UE, so that the UE periodically monitors, according to the clock information, the network-side device in this embodiment during a period when the network-side device in this embodiment is in the sleep state in which the time length is greater than the sleep length threshold, to determine whether the network-side device in this embodiment enters the active state in the DTX process in advance.

Optionally, the judging module 36 is connected to the receiving module 33 and is configured to provide the result of the determining to the receiving module 33. The judging module 36 is connected to the activation entering module 35 and is configured to provide the result of the determining to the activation entering module 35.

The network-side device provided in this embodiment may be an eNB, but is not limited thereto.

Functional modules of the network-side device provided in this embodiment may be used to implement a process of the transmission control method embodiment shown in FIG. 1. A specific operating principle thereof is not described again. For details, refer to the descriptions about the method embodiment.

The network-side device provided in this embodiment generates DTX sleep indication information, which is used to indicate a start time at which the network-side device enters a sleep state each time during DTX execution, and a time length of the network-side device being in the sleep state each time during the DTX execution, and sends the generated DTX sleep indication information to a UE, so that the UE can learn, according to the DTX sleep indication information, when the network-side device in this embodiment enters the sleep state, and a time length of the network-side device in this embodiment being in the sleep state. Then, the UE may suspend data processing and/or data transmission of the UE during a period when the network-side device in this embodiment is in the sleep state each time. The UE does not restore the data processing and/or the data transmission until the network-side device switches to an active state again, to save power that is consumed for performing the data processing and/or the data transmission during a period when the network-side device is in the sleep state, and help further save power of the UE.

FIG. 5 is a schematic structural diagram of still another network-side device according to an embodiment of the present invention. As shown in FIG. 5, the network-side device in this embodiment includes: a memory 51, a processor 52, and a communications interface 53.

The memory 51 is configured to store a program. Specifically, the program may include program code, where the program code includes a computer operation instruction. The memory 51 may include a high-speed RAM memory, and may also include a non-volatile memory (non-volatile memory), such as at least one disk memory.

The processor 52 is configured to execute the program stored in the memory 51, to generate DTX sleep indication information, where the DTX sleep indication information is used to indicate a start time at which the network-side device enters a sleep state each time during DTX execution, and a time length of the network-side device being in the sleep state each time during the DTX execution.

The processor 52 may be a central processing unit (Central Processing Unit, CPU for short) or an application specific integrated circuit (Application Specific Integrated Circuit, ASIC for short), or may be configured as one or more integrated circuits for implementing this embodiment of the present invention.

The communications interface 53 is configured to send, to a UE in a cell of the network-side device, the DTX sleep indication information generated by the processor 52, so that the UE suspends, according to the DTX sleep indication information, data processing and/or data transmission of the UE during a period when the network-side device is in the sleep state.

In an optional implementation manner, the processor 52 is specifically configured to generate, according to configuration information of periodic DTX, the DTX sleep indication information before the DTX execution, where the DTX sleep indication information includes a period length of executing DTX, a start time for executing DTX, and a sleep length within each DTX period.

Correspondingly, the communications interface 53 may be specifically configured to periodically broadcast, from a beginning of the DTX execution, the DTX sleep indication information to the UE in the cell of the network-side device in this embodiment, so that the UE suspends, according to the DTX sleep indication information, the data processing and/or the data transmission of the UE during the period when the network-side device in this embodiment is in the sleep state.

In an optional implementation manner, the processor 52 may be specifically configured to generate, before the network-side device enters the sleep state each time during the DTX execution, the DTX sleep indication information, where the DTX sleep indication information includes: a start time for entering the sleep state this time, and a time length of being in the sleep state this time.

Correspondingly, the communications interface 53 may be specifically configured to send, before the network-side device enters the sleep state each time during the DTX execution, the DTX sleep indication information to the UE in the cell of the network-side device in this embodiment, so that the UE suspends, according to the DTX sleep indication information, the data processing and/or the data transmission of the UE during the period when the network-side device in this embodiment is in the sleep state.

The communications interface 53 is further specifically configured to send, before the network-side device enters the sleep state each time during the DTX execution, the DTX sleep indication information to the UE in the cell of the network-side device in this embodiment by using a paging message, a MAC CE, or downlink control information, so that the UE suspends, according to the DTX sleep indication information, the data processing and/or the data transmission of the UE during the period when the network-side device in this embodiment is in the sleep state.

In an optional implementation manner, the communications interface 53 may be specifically configured to send, before the network-side device enters the sleep state each time during the DTX execution, the DTX sleep indication information to the UE in the cell of the network-side device in this embodiment for multiple times, to ensure that the UE suspends, according to the DTX sleep indication information, the data processing and/or the data transmission of the UE during the period when the network-side device in this embodiment is in the sleep state.

The communications interface 53 is further configured to: if a time length of the network-side device in this embodiment being in the sleep state this time is greater than a preset sleep length threshold, receive, during the period when the network-side device is in the sleep state, indication information sent by the UE, where the indication information is sent by the UE at a preset time point or periodically during a period when the network-side device in this embodiment is in the sleep state this time, and the UE sends the indication information after determining, according to the DTX sleep indication information, that the time length of the network-side device in this embodiment being in the sleep state this time is greater than the sleep length threshold.

The processor 52 is further configured to determine, according to average signal strength of the indication information and/or occurrence density of the indication information, whether to enter an active state in a DTX process in advance, where the indication information is received by the communications interface 53.

The processor 52 is further configured to: before the communications interface 53 receives the indication information, when the time length of the network-side device in this embodiment being in the sleep state this time is greater than the sleep length threshold, enter a short active state for at least one time during the period when the network-side device in this embodiment is in the sleep state.

Based on this, the communications interface 53 is further configured to send, in the short active state, a downlink pilot signal to the UE, so that the UE sends the indication information according to strength of the downlink pilot signal.

The processor 52 is further configured to determine, before the network-side device enters the sleep state each time during the DTX execution, whether a forthcoming time length of the network-side device being in the sleep state is greater than the sleep length threshold.

The communications interface 53 is further configured to: if a result of the determining of the processor 52 is yes, send, before the network-side device enters the sleep state in which the time length is greater than the sleep length threshold, clock information of the network-side device in this embodiment to the UE, so that the UE periodically monitors, according to the clock information, the network-side device in this embodiment during a period when the network-side device in this embodiment is in the sleep state in which the time length is greater than the sleep length threshold, to determine whether the network-side device in this embodiment enters the active state in the DTX process in advance.

Optionally, if the foregoing memory 51, processor 52, and communications interface 53 are implemented independently, the memory 51, the processor 52, and the communications interface 53 may be interconnected and complete communication with each other through a bus. The bus may be an industry standard architecture (Industry Standard Architecture, ISA for short) bus, a peripheral component interconnect (Peripheral Component, PCI for short) bus, or an extended industry standard architecture (Extended Industry Standard Architecture, EISA for short) bus, or the like. The bus may be classified into an address bus, a data bus, a control bus, and the like. For ease of denotation, the bus is represented by using only one thick line in FIG. 5; however, it does not indicate that there is only one bus or only one type of bus.

If the foregoing memory 51, processor 52, and communications interface 53 are integrated into a chip for implementation, the memory 51, the processor 52, and the communications interface 53 may complete communication with each other through an internal interface.

The network-side device provided in this embodiment may be an eNB, but is not limited thereto.

The network-side device provided in this embodiment may be used to implement a process of the transmission control method embodiment shown in FIG. 1. A specific operating principle thereof is not described again. For details, refer to the descriptions about the method embodiment.

The network-side device provided in this embodiment generates DTX sleep indication information, which is used to indicate a start time at which the network-side device enters a sleep state each time during DTX execution, and a time length of the network-side device being in the sleep state each time during the DTX execution, and sends the generated DTX sleep indication information to a UE, so that the UE can learn, according to the DTX sleep indication information, when the network-side device in this embodiment enters the sleep state, and a time length of the network-side device in this embodiment being in the sleep state. Then, the UE may suspend data processing and/or data transmission of the UE during a period when the network-side device in this embodiment is in the sleep state each time. The UE does not restore the data processing and/or the data transmission until the network-side device switches to an active state again, to save power that is consumed for performing the data processing and/or the data transmission during a period when the network-side device is in the sleep state, and help further save power of the UE.

FIG. 6 is a schematic structural diagram of a UE according to an embodiment of the present invention. As shown in FIG. 6, the UE in this embodiment includes: a receiving module 61 and a suspending module 62.

The receiving module 61 is configured to receive DTX sleep indication information sent by a network-side device, where the DTX sleep indication information is used to indicate a start time at which the network-side device enters a sleep state each time during DTX execution, and a time length of the network-side device being in the sleep state each time during the DTX execution.

The suspending module 62 is connected to the receiving module 61 and is configured to suspend, according to the DTX sleep indication information received by the receiving module 61, data processing and/or data transmission of the UE in this embodiment during a period when the network-side device is in the sleep state.

In an optional implementation manner, the receiving module 61 is specifically configured to receive the DTX sleep indication information that is periodically broadcast by the network-side device from a beginning of the DTX execution.

Alternatively, the receiving module 61 is specifically configured to receive the DTX sleep indication information that is sent by the network-side device before the network-side device enters the sleep state each time during the DTX execution.

Optionally, the receiving module 61 is further specifically configured to receive a paging message, a MAC CE, or downlink control information that is sent by the network-side device before the network-side device enters the sleep state each time during the DTX execution and carries the DTX sleep indication information.

In an optional implementation manner, the suspending module 62 may be specifically configured to execute any one or a combination of the following operations:
stopping, according to the DTX sleep indication information, encapsulation of a PDU at each layer during the period when the network-side device is in the sleep state;
prohibiting, according to the DTX sleep indication information, sending of an SR during the period when the network-side device is in the sleep state;
configuring, according to the DTX sleep indication information, that to-be-sent uplink data does not belong to any logical channel during the period when the network-side device is in the sleep state; and
prohibiting, according to the DTX sleep indication information, sending of a random access sequence number during the period when the network-side device is in the sleep state, and skipping monitoring a paging channel.

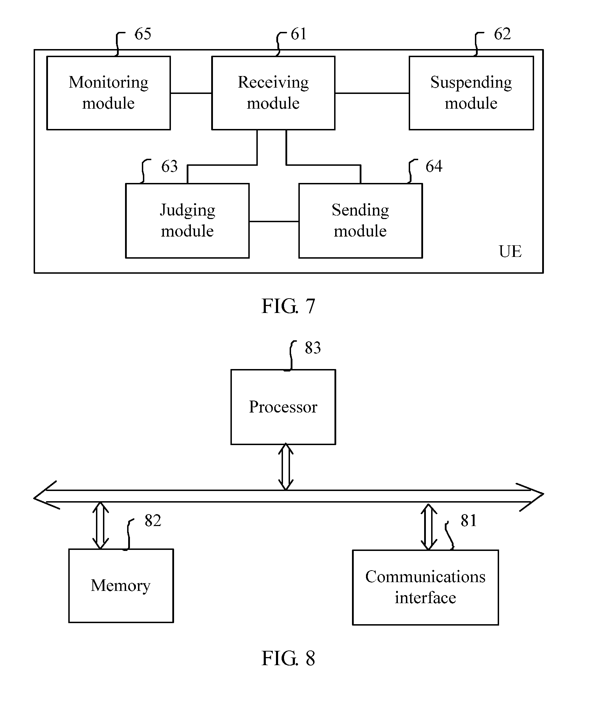

In an optional implementation manner, as shown in FIG. 7, the UE in this embodiment may further include: a judging module 63 and a sending module 64.

The judging module 63 is connected to the receiving module 61 and is configured to determine, according to the DTX sleep indication information received by the receiving module 61, whether a time length of the network-side device being in the sleep state this time is greater than a preset sleep length threshold.

The sending module 64 is connected to the judging module 63 and is configured to: if a result of the determining of the judging module 63 is yes, send indication information to the network-side device at a preset time point or periodically during the period when the network-side device is in the sleep state, so that the network-side device determines, according to average signal strength of the indication information and/or occurrence density of the indication information, whether to enter an active state in a DTX process in advance.

Based on the foregoing, the receiving module 61 may be further configured to: before the sending module 64 sends the indication information, receive a downlink pilot signal sent by the network-side device during the period when the network-side device is in the sleep state, where the downlink pilot signal is sent to the UE by the network-side device in a short active state, and the network-side device enters, when the time length of the network-side device being in the sleep state this time is greater than the sleep length threshold, the short active state for at least one time during a period when the network-side device is in the sleep state this time.

Correspondingly, the sending module 64 is further connected to the receiving module 61 and may be specifically configured to send, according to strength of the downlink pilot signal received by the receiving module 61, the indication information to the network-side device at the preset time point or periodically.

The receiving module 61 may be further configured to: when the time length of the network-side device being in the sleep state this time is greater than the sleep length threshold, receive, before the network-side device enters the sleep state this time, clock information of the network-side device that is sent by the network-side device. Optionally, the receiving module 61 may obtain, from the judging module 63, a result of whether the time length of the network-side device being in the sleep state this time is greater than the sleep length threshold.

As shown in FIG. 7, the UE in this embodiment further includes a monitoring module 65.

The monitoring module 65 is connected to the receiving module 61 and is configured to periodically monitor, according to the clock information received by the receiving module 61, the network-side device during the period when the network-side device is in the sleep state this time, to determine whether the network-side device enters the active state in the DTX process in advance.

Functional modules of the UE provided in this embodiment may be used to implement a process of the transmission method embodiment shown in FIG. 2. A specific operating principle thereof is not described again. For details, refer to the descriptions about the method embodiment.

The UE provided in this embodiment works with a network-side device provided in the foregoing embodiments to determine, according to a start time at which the network-side device enters a sleep state each time during DTX execution, and a time length of the network-side device being in the sleep state each time during the DTX execution, when the network-side device enters the sleep state, and a time length of the network-side device being in the sleep state, where the start time and the time length are provided by the network-side device, so that the UE suspends data processing and/or data transmission of the UE during a period when the network-side device is in the sleep state, to save power that is consumed for performing the data processing and/or the data transmission during the period when the network-side device is in the sleep state, a signaling overhead, and the like.

FIG. 8 is a schematic structural diagram of still another UE according to an embodiment of the present invention. As shown in FIG. 8, the UE in this embodiment includes: a communications interface 81, a memory 82, and a processor 83.

The communications interface 81 is configured to receive DTX sleep indication information sent by a network-side device, where the DTX sleep indication information is used to indicate a start time at which the network-side device enters a sleep state each time during DTX execution, and a time length of the network-side device being in the sleep state each time during the DTX execution.

The memory 82 is configured to store a program. Specifically, the program may include program code, where the program code includes a computer operation instruction. The memory 82 may include a high-speed RAM memory, and may also include a non-volatile memory (non-volatile memory), such as at least one disk memory.

The processor 83 is configured to execute the program stored in the memory 82 to suspend, according to the DTX sleep indication information received by the communications interface 81, data processing and/or data transmission of the UE during a period when the network-side device is in the sleep state.

In an optional implementation manner, the communications interface 81 may be specifically configured to receive the DTX sleep indication information that is periodically broadcast by the network-side device from a beginning of the DTX execution.

Alternatively, the communications interface 81 is specifically configured to receive the DTX sleep indication information that is sent by the network-side device before the network-side device enters the sleep state each time during the DTX execution.

Optionally, the communications interface 81 is further specifically configured to receive a paging message, a MAC CE, or downlink control information that is sent by the network-side device before the network-side device enters the sleep state each time during the DTX execution and carries the DTX sleep indication information.

In an optional implementation manner, the processor 83 may be specifically configured to execute any one or a combination of the following operations:
stopping, according to the DTX sleep indication information, encapsulation of a PDU at each layer during the period when the network-side device is in the sleep state;
prohibiting, according to the DTX sleep indication information, sending of an SR during the period when the network-side device is in the sleep state;
configuring, according to the DTX sleep indication information, that to-be-sent uplink data does not belong to any logical channel during the period when the network-side device is in the sleep state; and
prohibiting, according to the DTX sleep indication information, sending of a random sequence sequence number during the period when the network-side device is in the sleep state, and skipping monitoring a paging channel.

In an optional implementation manner, the processor 83 is further configured to determine, according to the DTX sleep indication information received by the communications interface 81, whether a time length of the network-side device being in the sleep state this time is greater than a preset sleep length threshold.

The communications interface 81 is further configured to: if a result of the determining of the processor 83 is yes, send indication information to the network-side device at a preset time point or periodically during the period when the network-side device is in the sleep state, so that the network-side device determines, according to average signal strength of the indication information and/or occurrence density of the indication information, whether to enter an active state in a DTX process in advance.

Based on the foregoing, the communications interface 81 may be further configured to: before sending the indication information, receive a downlink pilot signal sent by the network-side device during the period when the network-side device is in the sleep state, where the downlink pilot signal is sent to the UE by the network-side device in a short active state, and the network-side device enters, when the time length of the network-side device being in the sleep state this time is greater than the sleep length threshold, the short active state for at least one time during a period when the network-side device is in the sleep state this time.

Correspondingly, the communications interface 81 may be specifically configured to send, according to strength of the received downlink pilot signal, the indication information to the network-side device at the preset time point or periodically.

The communications interface 81 may be further configured to: when the time length of the network-side device being in the sleep state this time is greater than the sleep length threshold, receive, before the network-side device enters the sleep state this time, clock information of the network-side device that is sent by the network-side device.

The processor 83 is further configured to periodically monitor, according to the clock information received by the communications interface 81, the network-side device during the period when the network-side device is in the sleep state this time, to determine whether the network-side device enters the active state in the DTX process in advance.

Optionally, if the foregoing communications interface 81, memory 82, and processor 83 are implemented independently, the communications interface 81, the memory 82, and the processor 83 may be interconnected and complete communication with each other through a bus. The bus may be an ISA bus, a PCI bus, or an EISA bus, or the like. The bus may be classified into an address bus, a data bus, a control bus, and the like. For ease of denotation, the bus is represented by using only one thick line in FIG. 8; however, it does not indicate that there is only one bus or only one type of bus.

If the foregoing communications interface 81, memory 82, and processor 83 are integrated into a chip for implementation, the communications interface 81, the memory 82, and the processor 83 may complete communication with each other through an internal interface.

The UE provided in this embodiment may be used to implement a process of the transmission method embodiment shown in FIG. 2. A specific operating principle thereof is not described again. For details, refer to the descriptions about the method embodiment.

The UE provided in this embodiment works with a network-side device provided in the foregoing embodiments to determine, according to a start time at which the network-side device enters a sleep state each time during DTX execution, and a time length of the network-side device being in the sleep state each time during the DTX execution, when the network-side device enters the sleep state, and a time length of the network-side device being in the sleep state, where the start time and the time length are provided by the network-side device, so that the UE suspends data processing and/or data transmission of the UE during a period when the network-side device is in the sleep state, to save power that is consumed for performing the data processing and/or the data transmission during the period when the network-side device is in the sleep state, a signaling overhead, and the like.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A transmission control method, comprising:
generating, by a network-side device, discontinuous transmission DTX sleep indication information, wherein the DTX sleep indication information is used to indicate a start time at which the network-side device enters a sleep state each time during DTX execution, and a time length of the network-side device being in the sleep state each time during the DTX execution; and
sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state.

2. The transmission control method according to claim 1, wherein the generating, by a network-side device, discontinuous transmission DTX sleep indication information comprises:
generating, by the network-side device according to configuration information of periodic DTX, the DTX sleep indication information before the DTX execution, wherein the DTX sleep indication information comprises a period length of executing DTX, a start time for executing DTX, and a sleep length within each DTX period.

3. The transmission control method according to claim 2, wherein the sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state comprises:
periodically broadcasting, by the network-side device from a beginning of the DTX execution, the DTX sleep indication information to the UE in the cell of the network-side device, so that the UE suspends, according to the DTX sleep indication information, the data processing and/or the data transmission of the UE during the period when the network-side device is in the sleep state.

4. The transmission control method according to claim 1, wherein the generating, by a network-side device, discontinuous transmission DTX sleep indication information comprises:
generating, by the network-side device before entering the sleep state each time during the DTX execution, the DTX sleep indication information, wherein the DTX sleep indication information comprises: a start time for entering the sleep state this time, and a time length of being in the sleep state this time.

5. The transmission control method according to claim 4, wherein the sending, by the network-side device, the DTX sleep indication information to a user equipment UE in a cell of the network-side device, so that the UE suspends, according to the DTX sleep indication information, data processing and/or data transmission of the UE during a period when the network-side device is in the sleep state comprises:
sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state.

6. The transmission control method according to claim 5, wherein the sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state comprises:
sending, by the network-side device before entering the sleep state each time during the DTX execution, the DTX sleep indication information to the UE in the cell of the network-side device by using a paging message, a media access control MAC control element CE, or downlink control information, so that the UE suspends, according to the DTX sleep indication information, the data processing and/or the data transmission of the UE during the period when the network-side device is in the sleep state.

7. The transmission control method according to claim 5 or 6, wherein the sending, by the network-side device before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state comprises:
sending, by the network-side device before entering the sleep state each time during the DTX execution, the DTX sleep indication information to the UE in the cell of the network-side device for multiple times, to ensure that the UE suspends, according to the DTX sleep indication information, the data processing and/or the data transmission of the UE during the period when the network-side device is in the sleep state.

8. The transmission control method according to any one of claims 1 to 7, further comprising:
if a time length of the network-side device being in the sleep state this time is greater than a preset sleep length threshold, receiving, by the network-side device during the period when the network-side device is in the sleep state, indication information sent by the UE, wherein the indication information is sent by the UE at a preset time point or periodically during a period when the network-side device is in the sleep state this time, and the indication information is sent after the UE determines, according to the DTX sleep indication information, that the time length of the network-side device being in the sleep state this time is greater than the sleep length threshold; and
determining, by the network-side device according to average signal strength of the indication information and/or occurrence density of the indication information, whether to enter an active state in a DTX process in advance.

9. The transmission control method according to claim 8, wherein before the receiving, by the network-side device during the period when the network-side device is in the sleep state, indication information sent by the UE, the transmission control method comprises:
if the time length of the network-side device being in the sleep state this time is greater than the sleep length threshold, entering, by the network-side device, a short active state for at least one time during the period when the network-side device is in the sleep state, and sending, in the short active state, a downlink pilot signal to the UE, so that the UE sends the indication information according to strength of the downlink pilot signal.

10. The transmission control method according to claim 8 or 9, further comprising:
determining, by the network-side device before entering the sleep state each time during the DTX execution, whether a forthcoming time length of the network-side device being in the sleep state is greater than the sleep length threshold; and
if a result of the determining is yes, sending, by the network-side device before entering the sleep state in which the time length is greater than the sleep length threshold, clock information of the network-side device to the UE, so that the UE periodically monitors, according to the clock information, the network-side device during a period when the network-side device is in the sleep state in which the time length is greater than the sleep length threshold, to determine whether the network-side device enters the active state in the DTX process in advance.

11. A transmission method, comprising:
receiving, by a user equipment UE, discontinuous transmission DTX sleep indication information sent by a network-side device, wherein the DTX sleep indication information is used to indicate a start time at which the network-side device enters a sleep state each time during DTX execution, and a time length of the network-side device being in the sleep state each time during the DTX execution; and
suspending, by the UE according to the DTX sleep indication information, data processing and/or data transmission of the UE during a period when the network-side device is in the sleep state.

12. The transmission method according to claim 11, wherein the receiving, by a user equipment UE, discontinuous transmission DTX sleep indication information sent by a network-side device comprises:
receiving, by the UE, the DTX sleep indication information that is periodically broadcast by the network-side device from a beginning of the DTX execution; or
receiving, by the UE, the DTX sleep indication information that is sent by the network-side device before the network-side device enters the sleep state each time during the DTX execution.

13. The transmission method according to claim 12, wherein the receiving, by the UE, the DTX sleep indication information that is sent by the network-side device before the network-side device enters the sleep state each time during the DTX execution comprises:
receiving, by the UE, a paging message, a media access control MAC control element CE, or downlink control information that is sent by the network-side device before the network-side device enters the sleep state each time during the DTX execution and carries the DTX sleep indication information.

14. The transmission method according to any one of claims 11 to 13, wherein the suspending, by the UE according to the DTX sleep indication information, data processing and/or data transmission of the UE during a period when the network-side device is in the sleep state comprises any one or a combination of the following operations:
stopping, by the UE according to the DTX sleep indication information, encapsulation of a protocol data unit PDU at each layer during the period when the network-side device is in the sleep state;
prohibiting, by the UE according to the DTX sleep indication information, sending of a scheduling request during the period when the network-side device is in the sleep state;
configuring, by the UE according to the DTX sleep indication information, that to-be-sent uplink data does not belong to any logical channel during the period when the network-side device is in the sleep state; and
prohibiting, by the UE according to the DTX sleep indication information, sending of a sequence number during the period when the network-side device is in the sleep state, and skipping monitoring a paging channel.

15. The transmission method according to any one of claims 11 to 14, further comprising:
determining, by the UE according to the DTX sleep indication information, whether a time length of the network-side device being in the sleep state this time is greater than a preset sleep length threshold; and
if a result of the determining is yes, sending, by the UE, indication information to the network-side device at a preset time point or periodically during the period when the network-side device is in the sleep state, so that the network-side device determines, according to average signal strength of the indication information and/or occurrence density of the indication information, whether to enter an active state in a DTX process in advance.

16. The transmission method according to claim 15, wherein before the sending, by the UE, indication information to the network-side device at a preset time point or periodically during the period when the network-side device is in the sleep state, the transmission method comprises:
receiving, by the UE, a downlink pilot signal sent by the network-side device during the period when the network-side device is in the sleep state, wherein the downlink pilot signal is sent to the UE by the network-side device in a short active state, and the network-side device enters, when the time length of the network-side device being in the sleep state this time is greater than the sleep length threshold, the short active state for at least one time during a period when the network-side device is in the sleep state this time; and
the sending, by the UE, indication information to the network-side device at a preset time point or periodically during the period when the network-side device is in the sleep state comprises:
sending, by the UE according to strength of the downlink pilot signal, the indication information to the network-side device at the preset time point or periodically.

17. The transmission method according to claim 15 or 16, further comprising:
if the time length of the network-side device being in the sleep state this time is greater than the sleep length threshold, receiving, by the UE before the network-side device enters the sleep state this time, clock information of the network-side device that is sent by the network-side device, and periodically monitoring, according to the clock information, the network-side device during the period when the network-side device is in the sleep state this time, to determine whether the network-side device enters the active state in the DTX process in advance.

18. A network-side device, comprising:
a generating module, configured to generate discontinuous transmission DTX sleep indication information, wherein the DTX sleep indication information is used to indicate a start time at which the network-side device enters a sleep state each time during DTX execution, and a time length of the network-side device being in the sleep state each time during the DTX execution; and
a sending module, configured to send the DTX sleep indication information to a user equipment UE in a cell of the network-side device, so that the UE suspends, according to the DTX sleep indication information, data processing and/or data transmission of the UE during a period when the network-side device is in the sleep state.

19. The network-side device according to claim 18, wherein the generating module is specifically configured to generate, according to configuration information of periodic DTX, the DTX sleep indication information before the DTX execution, wherein the DTX sleep indication information comprises a period length of executing DTX, a start time for executing DTX, and a sleep length within each DTX period.

20. The network-side device according to claim 19, wherein the sending module is specifically configured to periodically broadcast, from a beginning of the DTX execution, the DTX sleep indication information to the UE in the cell of the network-side device, so that the UE suspends, according to the DTX sleep indication information, the data processing and/or the data transmission of the UE during the period when the network-side device is in the sleep state.

21. The network-side device according to claim 18, wherein the generating module is specifically configured to generate, before entering the sleep state each time during the DTX execution, the DTX sleep indication information, wherein the DTX sleep indication information comprises: a start time for entering the sleep state this time, and a time length of being in the sleep state this time.

22. The network-side device according to claim 21, wherein the sending module is specifically configured to send, before entering the sleep state each time during the DTX execution, the DTX sleep indication information to the UE in the cell of the network-side device, so that the UE suspends, according to the DTX sleep indication information, the data processing and/or the data transmission of the UE during the period when the network-side device is in the sleep state.

23. The network-side device according to claim 22, wherein the sending module is further specifically configured to send, before entering the sleep state each time during the DTX execution, the DTX sleep indication information to the UE in the cell of the network-side device by using a paging message, a media access control MAC control element CE, or downlink control information, so that the UE suspends, according to the DTX sleep indication information, the data processing and/or the data transmission of the UE during the period when the network-side device is in the sleep state.

24. The network-side device according to claim 22 or 23, wherein the sending module is specifically configured to send, before entering the sleep state each time during the DTX execution, the DTX sleep indication information to the UE in the cell of the network-side device for multiple times, to ensure that the UE suspends, according to the DTX sleep indication information, the data processing and/or the data transmission of the UE during the period when the network-side device is in the sleep state.

25. The network-side device according to any one of claims 18 to 24, further comprising:
a receiving module, configured to: if a time length of the network-side device being in the sleep state this time is greater than a preset sleep length threshold, receive, during the period when the network-side device is in the sleep state, indication information sent by the UE, wherein the indication information is sent by the UE at a preset time point or periodically during a period when the network-side device is in the sleep state this time, and the indication information is sent after the UE determines, according to the DTX sleep indication information, that the time length of the network-side device being in the sleep state this time is greater than the sleep length threshold; and
a determining module, configured to determine, according to average signal strength of the indication information and/or occurrence density of the indication information, whether to enter an active state in a DTX process in advance.

26. The network-side device according to claim 25, further comprising:
an activation entering module, configured to: before the receiving module receives the indication information, when the time length of the network-side device being in the sleep state this time is greater than the sleep length threshold, enter a short active state for at least one time during the period when the network-side device is in the sleep state; and
the sending module is further configured to send, in the short active state, a downlink pilot signal to the UE, so that the UE sends the indication information according to strength of the downlink pilot signal.

27. The network-side device according to claim 25 or 26, further comprising:
a judging module, configured to determine, before entering the sleep state each time during the DTX execution, whether a forthcoming time length of the network-side device being in the sleep state is greater than the sleep length threshold; and
the sending module is further configured to: if a result of the determining of the judging module is yes, send, before entering the sleep state in which the time length is greater than the sleep length threshold, clock information of the network-side device to the UE, so that the UE periodically monitors, according to the clock information, the network-side device during a period when the network-side device is in the sleep state in which the time length is greater than the sleep length threshold, to determine whether the network-side device enters the active state in the DTX process in advance.

28. A user equipment, comprising:
a receiving module, configured to receive discontinuous transmission DTX sleep indication information sent by a network-side device, wherein the DTX sleep indication information is used to indicate a start time at which the network-side device enters a sleep state each time during DTX execution, and a time length of the network-side device being in the sleep state each time during the DTX execution; and
a suspending module, configured to suspend, according to the DTX sleep indication information, data processing and/or data transmission of the user equipment during a period when the network-side device is in the sleep state.

29. The user equipment according to claim 28, wherein the receiving module is specifically configured to receive the DTX sleep indication information that is periodically broadcast by the network-side device from a beginning of the DTX execution; or
the receiving module is specifically configured to receive the DTX sleep indication information that is sent by the network-side device before the network-side device enters the sleep state each time during the DTX execution.

30. The user equipment according to claim 29, wherein the receiving module is further specifically configured to receive a paging message, a media access control MAC control element CE, or downlink control information that is sent by the network-side device before the network-side device enters the sleep state each time during the DTX execution and carries the DTX sleep indication information.

31. The user equipment according to any one of claims 28 to 30, wherein the suspending module is specifically configured to execute any one or a combination of the following operations:
stopping, according to the DTX sleep indication information, encapsulation of a protocol data unit PDU at each layer during the period when the network-side device is in the sleep state;
prohibiting, according to the DTX sleep indication information, sending of a scheduling request during the period when the network-side device is in the sleep state;
configuring, according to the DTX sleep indication information, that to-be-sent uplink data does not belong to any logical channel during the period when the network-side device is in the sleep state; and
prohibiting, according to the DTX sleep indication information, sending of a sequence number during the period when the network-side device is in the sleep state, and skipping monitoring a paging channel.

32. The user equipment according to any one of claims 28 to 31, further comprising:
a judging module, configured to determine, according to the DTX sleep indication information, whether a time length of the network-side device being in the sleep state this time is greater than a preset sleep length threshold; and
a sending module, configured to: if a result of the determining of the judging module is yes, send indication information to the network-side device at a preset time point or periodically during the period when the network-side device is in the sleep state, so that the network-side device determines, according to average signal strength of the indication information and/or occurrence density of the indication information, whether to enter an active state in a DTX process in advance.

33. The user equipment according to claim 32, wherein the receiving module is further configured to: before the sending module sends the indication information, receive a downlink pilot signal sent by the network-side device during the period when the network-side device is in the sleep state, wherein the downlink pilot signal is sent to the UE by the network-side device in a short active state, and the network-side device enters, when the time length of the network-side device being in the sleep state this time is greater than the sleep length threshold, the short active state for at least one time during a period when the network-side device is in the sleep state this time; and
the sending module is specifically configured to send, according to strength of the downlink pilot signal, the indication information to the network-side device at the preset time point or periodically.

34. The user equipment according to claim 32 or 33, wherein the receiving module is further configured to: when the time length of the network-side device being in the sleep state this time is greater than the sleep length threshold, receive, before the network-side device enters the sleep state this time, clock information of the network-side device that is sent by the network-side device; and
the user equipment further comprises:
a monitoring module, configured to periodically monitor, according to the clock information, the network-side device during the period when the network-side device is in the sleep state this time, to determine whether the network-side device enters the active state in the DTX process in advance.

35. A network-side device, comprising:
a memory, configured to store a program;
a processor, configured to execute the program to generate discontinuous transmission DTX sleep indication information, wherein the DTX sleep indication information is used to indicate a start time at which the network-side device enters a sleep state each time during DTX execution, and a time length of the network-side device being in the sleep state each time during the DTX execution; and
a communications interface, configured to send the DTX sleep indication information to a user equipment UE in a cell of the network-side device, so that the UE suspends, according to the DTX sleep indication information, data processing and/or data transmission of the UE during a period when the network-side device is in the sleep state.

36. A user equipment, comprising:
a communications interface, configured to receive discontinuous transmission DTX sleep indication information sent by a network-side device, wherein the DTX sleep indication information is used to indicate a start time at which the network-side device enters a sleep state each time during DTX execution, and a time length of the network-side device being in the sleep state each time during the DTX execution;
a memory, configured to store a program; and
a processor, configured to execute the program to suspend, according to the DTX sleep indication information, data processing and/or data transmission of the UE during a period when the network-side device is in the sleep state.
